Europäisches Patentamt

European Patent Office

Office européen des brevets

(19)

(11) Veröffentlichungsnummer : **0 167 194
B1**

(12) EUROPÄISCHE PATENTSCHRIFT

(45) Veröffentlichungstag der Patentschrift :
09.11.88

(51) Int. Cl.⁴ : **H 02 M 3/335**

(21) Anmeldenummer : 85200880.4

(22) Anmeldetag : 05.06.85

(54) Schaltungsanordnung zur Versorgung der Regel- und Steuereinrichtung eines geregelten Gleichspannungswandlers.

(30) Priorität : 07.06.84 DE 3421133

(43) Veröffentlichungstag der Anmeldung :
08.01.86 Patentblatt 86/02

(45) Bekanntmachung des Hinweises auf die Patenterteilung : 09.11.88 Patentblatt 88/45

(84) Benannte Vertragsstaaten :
AT DE FR GB IT NL SE

(56) Entgegenhaltungen :
EP-A- 0 046 515
J. WÜSTEHUBE: "Schaltnetzteile", 2. Auflage, Band
33, Expert Verlag 7031 Grafenau 1, Württ., Seiten
406,410.

(73) Patentinhaber : Philips Patentverwaltung GmbH
Wendenstrasse 35 Postfach 10 51 49
D-2000 Hamburg 1 (DE)
DE
N.V. Philips' Gloeilampenfabrieken
Groenewoudseweg 1
NL-5621 BA Eindhoven (NL)
FR GB IT NL SE AT

(72) Erfinder : Lösel, Walter, Dipl.-Ing.
Anemonenweg 11
D-8510 Fürth-Vach (DE)

(74) Vertreter : Peuckert, Hermann, Dipl.-Ing. et al
Philips Patentverwaltung GmbH Wendenstrasse 35
Postfach 10 51 49
D-2000 Hamburg 1 (DE)

**Beschreibung**

Die Erfindung betrifft eine Schaltungsanordnung zur Versorgung der Regel- und Steuereinrichtung eines geregelten Gleichspannungswandlers, die folgende Merkmale umfaßt : Beim Einschalten der Eingangsspannung des Gleichspannungswandlers wird ein erster Transistor geöffnet, dessen Emitterstrom einen Ladekondensator lädt, aus dem die Regel- und Steuereinrichtung gespeist wird ; sobald der Gleichspannungswandler arbeitet, liefert er eine genügend große Hilfspannung, mit der der Ladekondensator über eine erste Diode weiter aufgeladen und als Folge davon der erste Transistor gesperrt wird.

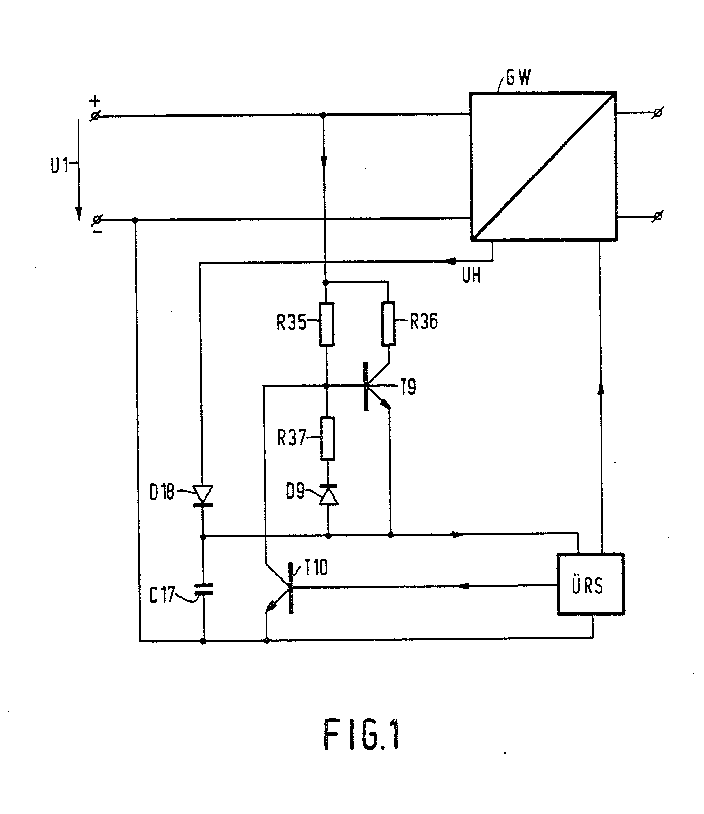

In der von J. Wüstehube herausgegebenen Monographie « Schaltnetzteile » (s. den Beitrag von Lütjens, H. W. : Technisch-wirtschaftliche Gesichtspunkte bei der Entwicklung und Fertigung am Beispiel eines 40-W-Durchflußwandler-Schaltnetzteils. In : Schaltnetzteile. Wüstehube, J. u. a. 2. Auflage, VDE-Verlag, 1 000 Berlin 12, 1982) ist auf Seite 406 in Bild 11.11 und auf Seite 410 in Bild 11.14 eine Schaltungsanordnung gezeigt, die die eingangs genannte Schaltungsanordnung als Teilschaltung enthält. In Fig. 1 sind die für die folgenden Betrachtungen wichtigsten Merkmale der bekannten Schaltung wiedergegeben.

Der Primärseite eines geregelten Gleichspannungswandlers GW wird die ungeregelte Spannung U1 zugeführt ; die Spannung U1 ist die von einem nicht gezeigten Netzgleichrichter gleichgerichte Netzspannung. Damit der Schalttransistor des Gleichspannungswandlers GW betätigt und das Tastverhältnis verändert werden kann, müssen die zugehörigen Bauteile, also der Regler, der Oszillator und weitere Bauteile, denen Überwachungs- und Schutzfunktionen zukommt, mit Spannung versorgt werden ; die genannten Bauteile sind schematisch in Fig. 1 durch eine Einheit ÜRS dargestellt. Die Spannungsversorgung der Einheit ÜRS erfolgt während der Anlaufphase des Gleichspannungswandlers GW, d. h. während eines nicht näher angebbaren Zeitintervalles nach dem Einschalten, über die Spannung U1. Arbeitet dann der Gleichspannungswandler GW und die Einheit ÜRS bestimmungsgemäß, wird ihre Versorgung über die Eingangsspannung U1 des Gleichspannungswandlers abgeschaltet und die weitere Versorgung von einer Hilfsspannung UH auf der Sekundärseite des Gleichspannungswandlers GW übernommen. Der nun erreichte Zustand soll im folgenden Betriebszustand des Gleichspannungswandlers genannt werden.

Im einzelnen laufen folgende Vorgänge ab : Steigt die Eingangsspannung U1 nach dem Einschalten an, so wird ein Transistor T9 aufgrund der Potentialverhältnisse, die sich durch Widerstände R35, R36 und R37 einstellen, geöffnet. Der geöffnete Transistor T9 lädt einen Ladekondensator C17 auf, aus dem die Einheit ÜRS gespeist wird. Erreicht die Spannung am Ladekondensator C17 eine Schwellenspannung — die Überwachungsschaltung hierfür enthält die Einheit ÜRS — so wird mit einem Transistor T10 der Transistor T9 soweit geschlossen, daß die Spannung am Ladekondensator C17 in der Nähe der Schwellenspannung liegt. Mit der inzwischen auf ihren vollen Wert angestiegenen Hilfspannung UH wird der Kondensator C17 über ein Diode D18 auf einen höheren Wert als die Schwellenspannung aufgeladen. Als Folge davon öffnet nun die Einheit ÜRS den Transistor T10 vollständig ; damit wird der Transistor T9 gesperrt und die Versorgung der Einheit ÜRS erfolgt nur über die Hilfsspannung UH.

Die Umschaltung wird vorgenommen, um die Verlustleistung zu reduzieren, die mit der Aufladung des Ladekondensators C17 über die in der Regel sehr hohe Eingangsspannung U1 verbunden ist. Die Eingangsspannung liegt bei einem 220-Volt-Netz in der Größenordnung von 300 V und deshalb tritt z. B. am Widerstand R35, über den der Ladestrom den Ladekondensator C17 fließt, eine Verlustleistung auf, die in der Größenordnung einiger Watt liegen kann.

Jedoch auch dann, wenn der Transistor T9 geschlossen ist, durch den Widerstand R36 also kein Strom mehr fließt, führt der Strom über den Widerstand R35 und über die Kollektor-Emitter-Strecke des Transistors T10 zu Verlusten, die bei einem Watt liegen können. Weitere Verluste im Betriebszustand entstehen durch die Entladung des Ladekondensators C17 über eine Diode D19 und einen Widerstand R37. Derartige Verluste reduzieren den Wirkungsgrad des Schaltnetzteiles vor allem dann, wenn geringe Leistungen zu übertragen sind.

Der Erfindung liegt die Aufgabe zugrunde, eine Schaltungsanordnung zur Versorgung der Regel- und Steuereinrichtung eines geregelten Gleichspannungswandlers anzugeben, deren Verluste während des Betriebszustandes praktisch zu vernachlässigen sind.

Diese Aufgabe wird dadurch gelöst, daß eine Konstantstromschaltung vorgesehen ist, die zusammen mit der Spannungsquelle für die Eingangsspannung des Gleichspannungswandlers eine ein- und ausschaltbare Konstantstromquelle bildet, zwischen deren Verbraucherklemmen eine erste Zener-Diode liegt und daß parallel zur ersten Zener-Diode die Serienschaltung der Basis-Emitter-Diode des ersten Transistors und des Ladekondensators angeordnet ist ; daß ein Schwellwertschalter vorgesehen ist, der die Konstantstromquelle aus- bzw. einschaltet, sobald die Spannung am Ladekondensator die durch die erste Zener-Diode erzeugte Referenzspannung um einen vorgegebenen Betrag über- bzw. unterschreitet ; daß durch den Strom eines Strompfades, über dem die Eingangsspannung des Gleichspannungswandlers abfällt und der einen ersten hochohmigen Widerstand und die erste Zener-Diode enthält, eine Referenzspannung an der ersten Zener-Diode auch bei abgeschalteter Stromquelle aufrecht erhalten wird.

Die erfindungsgemäße Anordnung hat den Vorteil, daß durch die Verwendung einer Stromquelle Verluste während der Anlaufphase des Gleichspannungswandlers nur linear mit der Eingangsspannung U1 steigen ; beim zitierten Stand der Technik dagegen steigt die Verlustleistung quadratisch mit der Eingangsspannung.

Während des Betriebszustandes des Gleichspannungswandlers treten die Hauptverluste an einem ersten hochohmigen Widerstand auf, der in einem Querzweig der Eingangsleitung des Gleichspannungswandlers liegt. Wegen des hohen Widerstandswertes dieses Widerstandes (größer 1MΩ), betragen selbst bei Spannungen von 300 V die Verluste weniger als 100 mW.

Vorteilhafte Ausgestaltungen sind in den Unteransprüchen angegeben.

Anhand der Figuren und eines Ausführungsbeispieles soll die Erfindung näher erläutert werden. Es zeigen :

Fig. 1 eine Schaltung nach dem Stand der Technik und

Fig. 2 eine erfindungsgemäße Schaltung.

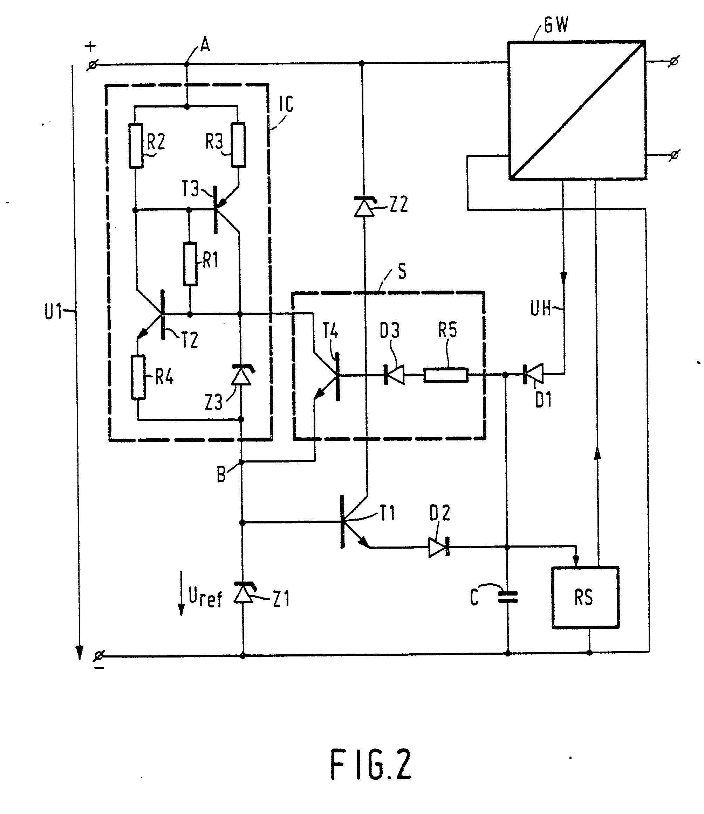

In Fig. 1 sind die gleichen Bezugszeichen verwendet wie im Bild 11.11 und Bild 11.14 der oben angegebenen Fundstelle, um die in der Beschreibungseinleitung gegebene Schilderung des Standes der Technik zu erleichtern. Welche Bauteile der Fig. 1 und 2 einander zuzuordnen sind, wird bei der Erläuterung der Fig. 2 durch eingeklammerte Angaben angedeutet werden. Bauteile und Größen, die in Fig. 1 und Fig. 2 mit den gleichen Bezugszeichen versehen sind, haben auch die gleichen Funktionen.

In Fig. 2 liefert eine nicht eingezeichnete Spannungsquelle die Eingangsspannung U1 für einen geregelten Gleichspannungswandler GW. Zusammen mit der nicht eingezeichneten Spannungsquelle bildet ein Zweipol, der im folgenden Konstantstromschaltung IC genannt wird, eine ein- und ausschaltbare Konstantstromquelle U1, IC. Ein Anschluß A des Zweipoles ist mit dem positiven Pol der nicht eingezeichneten Spannungsquelle verbunden ; der negative Pol dieser Spannungsquelle und der zweite Anschluß B des Zweipoles bilden die Verbraucherklemmen der ein- und ausschaltbaren Konstantstromquelle U1, IC.

Zwischen den Verbraucherklemmen liegt eine Zener-Diode Z1. Parallel zur Zener-Diode Z1 liegt eine Serienschaltung aus der Basis-Emitter-Diode eines Transistors T1 (T9) einer Diode D2 und eines Ladekondensators C (C17), der die Regel- und Steuereinrichtung RS des Gleichspannungswandlers GW speist. Der Kollektor des Transistors T1 ist über eine Zener-Diode Z2 mit dem Anschluß A der Konstantstromschaltung IC verbunden. Die Diode D2 soll sicherstellen, daß der Transistor T1 nicht im Inversbetrieb arbeitet.

Mit dem Einschalten der Spannung U1 wird auch die Konstantstromquelle U1, IC voll eingeschaltet, vorausgesetzt, die Spannung U1 hat einen weiter unten genauer angegebenen Wert überschritten. Die vom Strom der Konstantstromquelle U1, IC an der Zener-Diode Z1 erzeugte Referenzspannung Uref sorgt dafür, daß der Transistor T1 geöffnet werden kann. Seine tatsächliche Öffnung und damit das Laden des Ladekondensators C erfolgt aber erst dann, wenn die Spannung U1 soweit angestiegen ist, daß auch die Zener-Diode Z2 leitend wird.

Die Zener-Diode Z2 bewirkt, daß der Gleichspannungswandler GW entweder gar nicht oder fehlerfrei arbeitet. Für das einwandfreie Arbeiten ist es erforderlich, daß die Eingangsspannung U1 über einer Minimalspannung U1m und die Speisespannung UC für die Regel- und Steuereinrichtung RS über einer Minimalspannung UCm liegt. Ist die Spannung UC kleiner als die Minimalspannung UCM-UCm liegt etwa bei 8 V — so läuft z. B. der in der Regel — und Steuereinrichtung RS enthaltene Oszillator nicht an. Ist die Eingangsspannung U1 kleiner als die Minimalspannung U1m, so kann der Gleichspannungswandler seine Ausgangsspannung nicht auf den gewünschten Sollwert stabilisieren (U1m hängt u. a. vom Sollwert der Ausgangsspannung ab). Wird daher die Zener-Spannung der Zener-Diode Z2 größer als U1m-UCm-US-UD gewählt, wobei US die Sättigungsspannung des Transistors T1 und UD die Durchlaßspannung der Diode D2 bedeutet, so kann die Spannung UCm nur dann erreicht werden, wenn die Eingangsspannung U1 über der Spannung U1m liegt.

Der Ladevorgang des Ladekondensators C über den Transistor T1 wird beendet, wenn die Spannung UC am Kondensator C um 2 UD — hier bedeutet UD die ungefähre Durchlaßspannung einer Diode — unter der Referenzspannung Uref liegt ; dann ist nämlich der Transistor T1 gesperrt. Fällt die Spannung am Ladekondensator C, wird der Transistor T1 wieder geöffnet und der Kondensator C nachgeladen.

Mit dem Arbeiten des Gleichspannungswandlers GW steigt die Amplitude einer Hilfsspannung UH, die einer Übertragerwicklung auf der Sekundärseite des Wandlers GW entnommen wird, soweit an, daß der Ladekondensator C über eine Diode D1 (D18) weiter aufgeladen werden kann und seine Spannung UC größer als die Referenzspannung Uref wird. Hat die Spannung am Ladekondensator C die Referenzspannung um 2 UD überschritten, so schaltet der aus einem Widerstand R5, einer Diode D3 und einem Transistor T4 bestehende Schwellwertschalter S die Konstantstromquelle U1, IC aus ; der Gleichspannungswandler GW arbeitet nun im Betriebszustand.

Der Schwellwertschalter S ist so aufgebaut, daß der Emitter des Transistors T4 mit der Kathode der Zener-Diode Z1 und die Basis über die Diode D3 und den Widerstand R3 mit der Kathode der Diode D1 verbunden ist. Der Widerstand R5 dient der Begrenzung des Basisstromes des Transistors T4 ; die an ihm auftretende Verluste liegen wegen seines Widerstandswertes und der geringen Spannungsdifferenz bei einigen mW.

Das Ausschalten der Konstantstromquelle U1, IC wird dadurch erreicht, daß die leitende Kollektor-Emitter-Strecke des Transistors T4 eine Zener-Diode Z3 kurzschließt, die Bestandteil der Konstantstromschaltung IC ist.

Die als Zweipol ausgebildete Konstantstromschaltung IC enthält vier Widerstände R1, R2, R3, R4, die Zener-Diode Z3, einen npn-Transistor T2 und einen pnp-Transistor T3. Vom Anschluß A der Konstantstromschaltung führt ein erster Strompfad über den Widerstand R2, über den Kollektor und den Emitter des Transistors T2 und über den Widerstand R4 zum Anschluß B. Ein zweiter Strompfad vom Anschluß A zum Anschluß B führt über den Widerstand R3, den Emitter und den Kollektor des Transistors T3 und die Zener-Diode Z3. Der Kollektor des Transistors T2 ist mit der Basis des Transistors T3 und der Kollektor des Transistors T3 mit der Basis des Transistors T2 verbunden ; zwischen den Basen der Transistoren T2 und T3 liegt der hochohmige Widerstand R1.

In der Anlaufphase — also bei gesperrtem Transistor T4 — fließt mit steigender Spannung U1 ein ebenfalls steigender Strom über die Widerstände R2, R1 und über die Zener-Dioden Z3 und Z1. Die Spannung, die sich dadurch an der Zener-Diode Z3 aufbaut, öffnet den Transistor T2. Weil der geöffnete Transistor T2 das Basispotential des Transistors T3 absenkt, wird auch er geöffnet. Wegen der geöffneten Transistoren T2 und T3 steigt der Strom durch die Konstantstromschaltung IC soweit an, bis über den Dioden Z1 und Z3 die volle Zündspannung abfällt. Der maximale Strom ist durch den Wert der Zündspannung der Zener-Diode Z3 und durch die Werte der Widerstände R2, R3 und R4 festgelegt ; er wird nur dann erreicht, wenn die Eingangsspannung U1 über der Summe der Zündspannungen der Dioden Z1 und Z3 liegt.

Durch das Öffnen des Transistors T4 wird der Transistor T2 und anschließend der Transistor T3 gesperrt ; damit ist die Konstantstromquelle U1, IC abgeschaltet. Strom fließt dann nur noch über den Strompfad, der die Widerstände R2 und R1, die Kollektor-Emitter-Strecke des Transistors T4 und die Zener-Diode Z1 enthält. Dieser Strom liegt wegen des hohen Widerstandwertes (größer 1MΩ) des Widerstandes R1 unter Größenordnung von 100 μA und dient der Aufrechterhaltung einer Referenzspannung Uref an der Zener-Diode Z1, damit bei Ausfall oder Einbruch der Hilfsspannung UH die Konstantstromquelle U1, IC wieder eingeschaltet wird und der Ladekondensator C über die Eingangsspannung U1 aufgeladen wird. Bei abgeschalteter Konstantstromquelle U1, IC, also während des Betriebszustandes, verursacht der Strom durch den Widerstand R1 die einzigen nennenswerten Verluste ; ihre Maximalwerte liegen bei 100 mW.

## Patentansprüche

1. Schaltungsanordnung zur Versorgung der Regel- und Steuereinrichtung eines geregelten Gleichspannungswandlers, die folgende Merkmale umfaßt :

a) Beim Einschalten der Eingangsspannung (U1) des Gleichspannungswandlers (GW) wird ein erster Transistor (T1) geöffnet, dessen Emitterstrom einen Ladekondensator (C) lädt, aus dem die Regel- und Steuereinrichtung (RS) gespeist wird ;

b) sobald der Gleichspannungswandler (GW) arbeitet, liefert er eine genügend große Hilfsspannung (UH), mit der der Ladekondensator (C) über eine erste Diode (D1) weiter aufgeladen und als Folge davon der erste Transistor (T1) gesperrt wird, dadurch gekennzeichnet,

c) daß eine Konstantstromschaltung (IC) vorgesehen ist, die zusammen mit der Spannungsquelle für die Eingangsspannung (U1) des Gleichspannungswandlers (GW) eine ein- und ausschaltbare Konstantstromquelle (U1, IC) bildet, zwischen deren Verbraucherklemmen eine erste Zener-Diode (Z1) liegt und daß parallel zur ersten Zener-Diode (Z1) die Serienschaltung der Basis-Emitter-Diode des ersten Transistors (T1) und des Ladekondensators (C) angeordnet ist ;

d) daß ein Schwellwertschalter (S) vorgesehen ist, der die Konstantstromquelle (U1, IC) aus- bzw. einschaltet, sobald die Spannung am Ladekondensator (C) die durch die erste Zener-Diode (Z1) erzeugte Referenzspannung (Uref) um einen vorgegebenen Betrag über- bzw. unterschreitet ;

e) daß durch den Strom eines Strompfades, über dem die Eingangsspannung (U1) des Gleichspannungswandlers (GW) abfällt und der einen ersten hochohmigen Widerstand (R1) und die erste Zener-Diode (Z1) enthält, eine Referenzspannung (Uref) an der ersten Zener-Diode (Z1) auch bei abgeschalteter Stromquelle (U1, IC) aufrechterhalten wird.

2. Schaltungsanordnung nach Anspruch 1, dadurch gekennzeichnet, daß in der Kollektorleitung des ersten Transistors (T1) eine zweite Zener-Diode (Z2) angeordnet ist, deren Zener-Spannung so gewählt ist, daß die Spannung am Ladekondensator (C) die für den Anlauf der Regel- und Steuereinrichtung (RS) erforderliche Minimalspannung nur dann erreicht, wenn die Eingangsspannung (U1) des Gleichspannungswandlers (GW) den für den sicheren Betrieb notwendigen Minimalwert überschreitet.

3. Schaltungsanordnung nach Anspruch 1 oder 2, dadurch gekennzeichnet, daß in der Emitterleitung des ersten Transistors (T1) eine zweite Diode (D2) eingefügt ist, um den Inversbetrieb des ersten Transistors (T1) mit Sicherheit zu verhindern.

4. Schaltungsanordnung nach einem der Ansprüche 1, 2 oder 3, dadurch gekennzeichnet, daß es sich bei der Konstantstromschaltung (IC) um einen Zweipol handelt, dessen erster Anschluß (A) mit dem possitivem Pol der Spannungsquelle für die Eingangsspannung (U1) des Gleichspannungswandlers (GW) verbunden ist und dessen zweiter Anschluß (B) mit der Kathode der ersten Zener-Diode (Z1) verbunden ist und für dessen Aufbau folgende Merkmale charakteristisch sind :

- ein erster Strompfad führt vom ersten Anschluß (A) des Zweipols über einen zweiten Widerstand (R2), über den Kollektor und den Emitter eines zweiten Transistors (T2), bei dem es sich um einen npn-Transistor handelt, und über einen vierten Widerstand (R4) zum zweiten Anschluß (B) des Zweipols ;

- ein zweiter Strompfad führt vom ersten Anschluß (A) des Zwei-Poles über einen dritten Widerstand (R3), über den Emitter und den Kollektor eines dritten Transistors (T3), bei dem es sich um einen pnp-Transistor handelt, und über eine dritte Zener-Diode (Z3) ebenfalls zum zweiten Anschluß (B) des Zwei-Poles ;

- der Kollektor des zweiten Transistors (T2) ist mit der Basis des dritten Transistors (T3) und die Basis des zweiten Transistors (T2) mit dem Kollektor des dritten Transistors (T3) verbunden ;

- die Basen beider Transistoren (T2, T3) sind über den ersten hochohmigen Widerstand (R1) miteinander verbunden.

5. Schaltungsanordnung nach Anspruch 4, dadurch gekennzeichnet, daß der Schwellwertschalter (S) aus einem vierten Transistor (T4), einer dritten Diode (D3) und einem fünften Widerstand (R5) besteht und daß der Kollektor des vierten Transistors (T4), bei dem es sich um einen npn-Transistor handelt, mit der Kathode der dritten Zener-Diode (Z3) und sein Emitter mit der Kathode der ersten Zener-Diode (Z1) verbunden ist, daß die Basis des vierten Transistors mit der Kathode der dritten Diode (D3) und die Anode der dritten Diode (D3) über den fünften Widerstand (R5) mit der Kathode der ersten Diode (D1) verbunden ist.

**Claims**

1. A circuit arrangement for supplying the regulation and control device of a regulated DC voltage converter, which has the following features :

a) when the input voltage (U1) of the DC voltage converter (GW) is switched on, a first transistor (T1) is opened whose emitter current charges a charging capacitor (C) wherefrom the regulation and control device (RS) is supplied ;

b) as soon as the DC voltage converter (GW) operates, it delivers a sufficiently high auxiliary voltage (UH) whereby the charging capacitor (C) is charged further via a first diode (D1) and, consequently, the first transistor (T1) is cut off, characterized in that

c) there is provided a constant-current circuit (IC) which, together with the voltage source for the input voltage (U1) of the DC voltage converter (GW), constitutes a constant-current source (U1, IC) that can be switched on and off and between the load terminals of which there is connected a first Zener diode (Z1), the series connection of the base-emitter diode of the first transistor (T1) and the charging capacitor (C) being connected parallel to the first Zener diode (Z1) ;

d) there is provided a threshold value switch (S) which switches the constant-current source (U1, IC) off and on as soon as the voltage at the charging capacitor (C) rises above and falls below, respectively, the reference voltage (Uref) produced by the first Zener diode (Z1) by a predetermined amount ; .

e) a reference voltage (Uref) is maintained at the first Zener diode (Z1), even when the current source (U1, IC) is switched off, by the current of a current path across which the input voltage (U1) of the DC voltage converter (GW) decreases and which includes a first highohmic resistor (R1) and the first Zener diode (Z1).

2. A circuit arrangement as claimed in Claim 1, characterized in that a second Zener diode (Z2) is arranged in the collector lead of the first transistor (T1), the Zener voltage of this diode being chosen so that the voltage at the charging capacitor (C) reaches the minimum voltage required for the starting of the regulation and control device (RS) only when the input voltage (U1) of the DC voltage converter (GW) exceeds the minimum value necessary for reliable operation.

3. A circuit arrangement as claimed in Claim 1 or 2, characterized in that a second diode (D2) is inserted in the emitter lead of the first transistor (T1) in order to preclude inverse operation of the first transistor (T1).

4. A circuit arrangement as claimed in any one of the Claims 1, 2 or 3, characterized in that the constant-current circuit (IC) is formed as a bipole whose first connection (A) is connected to the positive terminal of the voltage source for the input voltage (U1) of the DC voltage converter (GW) and whose second connection (B) is connected to the cathode of the first Zener diode (Z1), while the following features are characteristic of its construction ;

- a first current path leads from the first connection (A) of the bipole, via a second resistor (R2), the collector and the emitter of a second transistor (T2), which is an npn transistor, and a fourth resistor (R4), to the second connection (B) of the bipole ;

- a second current path leads from the first connection (A) of the bipole, via a third resistor (R3), the emitter and the collector of a third transistor (T3), which is a pnp transistor, and a third Zener diode (Z3), also to the second connection (B) of the bipole ;

- the collector of the second transistor (T2) is connected to the base of the third transistor (T3) and the base of the second transistor (T2) is connected to the collector of the third transistor (T3) ;

- the bases of both transistors (T2, T3) are interconnected via the first high-ohmic resistor (R1).

5. A circuit arrangement as claimed in Claim 4, characterized in that the threshold value switch (S) comprises a fourth transistor (T4), a third diode (D3) and a fifth resistor (R5) and in that the collector of the fourth transistor (T4), which is an npn transistor, is connected to the cathode of the third Zener diode (Z3) and its emitter is connected to the cathode of the first Zener diode (Z1), in that the base of the fourth transistor is connected to the cathode of the third diode (D3) and the anode of the third diode (D3) is connected, via the fifth resistor (R5), to the cathode of the first diode (D1).

## Revendications

1. Montage de circuit destiné à alimenter le dispositif de réglage et de commande d'un convertisseur continu-continu réglé, qui présente les particularités suivantes :

a) lors de l'enclenchement de la tension d'entrée (U1) du convertisseur continu-continu (GW) s'ouvre un premier transistor (T1), dont le courant d'émetteur charge un condensateur de charge (C) à partir duquel est alimenté le dispositif de réglage et de commande (RS) ;

b) dès que le convertisseur continu-continu (GW) fonctionne, il fournit une tension auxiliaire (UH) suffisamment grande pour charger davantage le condensateur de charge (C) par l'intermédiaire d'une première diode (D1), en conséquence de quoi le premier transistor (T1) devient bloquant, caractérisé en ce

c) qu'est prévu un circuit à courant constant (IC) qui, avec la source de tension pour la tension d'entrée (U1) du convertisseur continu-continu (GW), forme une source de courant constant enclenchable et déclenchable (U1, IC), entre les bornes d'utilisateur, de laquelle est disposée une première diode Zener (Z1) et que, en parallèle avec la première diode Zener (Z1), est prévu le montage en série de la diode base-émetteur du premier transistor (T1) et du condensateur de charge (C) ;

d) qu'est prévu un commutateur à valeur de seuil (S) qui déclenche ou enclenche la source de courant constant (U1, IC) dès que la tension sur le condensateur de charge (C) dépasse par excès ou par défaut, d'une valeur prédéfinie, la tension de référence (Uref) produite par la première diode Zener (Z1) ;

e) que par le courant d'un trajet de courant, par l'intermédiaire duquel la tension d'entrée (U1) du convertisseur continu-continu (GW) chute et qui contient une première résistance à haute valeur ohmique (R1) et la première diode Zener (Z1), une tension de référence (Uref) est maintenue sur la première diode Zener (Z1), même lorsque la source de courant (U1, IC) est déclenchée.

2. Montage de circuit suivant la revendication 1, caractérisé en ce que dans la ligne de collecteur du premier transistor (T1), est disposée une deuxième diode Zener (Z2) dont la tension de Zener est choisie telle que la tension sur le condensateur de charge (C) n'atteigne la tension minimale nécessaire pour le démarrage du dispositif de réglage et de commande (RS) que lorsque la tension d'entrée (U1) du convertisseur continu-continu (GW) dépasse par excès la valeur minimale nécessaire pour le fonctionnement sûr.

3. Montage de circuit suivant la revendication 1 ou 2, caractérisé en ce que dans la ligne d'émetteur du premier transistor (T1), est ajoutée une deuxième diode (D2) pour empêcher de manière sûre le fonctionnement inverse du premier transistor (T1).

4. Montage de circuit suivant la revendication 1, 2 ou 3, caractérisé en ce que le circuit à courant constant (IC) est en l'occurrence un bipôle, dont la première borne (A) est connectée au pôle positif de la source de tension pour la tension d'entrée (U1) du convertisseur continu-continu (GW) et dont la deuxième borne est connectée à la cathode de la première diode Zener (Z1) et pour la construction duquel les particularités suivantes sont caractéristiques :

- un premier trajet de courant va de la première borne (A) du bipôle, par l'intermédiaire d'une deuxième résistance (R2), du collecteur et de l'émetteur d'un deuxième transistor (T2), qui est en l'occurrence un transistor npn, et d'une quatrième résistance (R4), à la deuxième borne (B) du bipôle ;

- un deuxième trajet de courant va de la première borne (A) du bipôle, par l'intermédiaire d'une troisième résistance (R3), de l'émetteur et du collecteur d'un troisième transistor (T3), qui est en l'occurrence un transistor pnp, et d'une troisième diode Zener (Z3), également à la deuxième borne (B) du bipôle ;

- le collecteur du deuxième transistor (T2) est connecté à la base du troisième transistor (T3) et la base du deuxième transistor (T2) est connectée au collecteur du troisième transistor (T3) ;

- les bases des deux transistors (T2, T3) sont connectées l'une à l'autre par l'intermédiaire de la première résistance à haute valeur ohmique (R1).

5. Montage de circuit suivant la revendication 4, caractérisé en ce que le commutateur à valeur de seuil (S) est formé d'un quatrième transistor (T4), d'une troisième diode (D3) et d'une cinquième résistance (R5) et que le collecteur du quatrième transistor (T4), qui est en l'occurrence un transistor npn, est connecté à la cathode de la troisième diode Zener (Z3), et son émetteur, à la cathode de la première diode Zener (Z1), que la base du quatrième transistor est connectée à la cathode de la troisième diode (D3) et l'anode de la troisième diode (D3) est connectée par l'intermédiaire de la cinquième résistance (R5) à la cathode de la première diode (D1).

FIG.1

FIG.2